# EUROPEAN PATENT SPECIFICATION

(11) **EP 4 385 758 B1**
(45) Date of publication and mention of the grant of the patent: **01.10.2025**
(21) Application number: 23213389.2
(22) Date of filing: 30.11.2023
(51) Int. Cl.: B60C 3/04, B60C 9/18

(54) **PNEUMATIC TIRE**
LUFTREIFEN
PNEUMATIQUE

(30) Priority: 13.12.2022 JP 2022198767
(43) Date of publication of application: 19.06.2024
(73) Proprietor: Sumitomo Rubber Industries, Ltd., Kobe-shi, Hyogo 651-0072 (JP)
(72) Inventor: TSUZUKI, Yuka, Kobe-shi, 651-0072 (JP)
(74) Representative: Manitz Finsterwald Patent- und Rechtsanwaltspartnerschaft mbB

(56) References cited:
- EP-A1- 0 732 226
- EP-A1- 2 689 939
- EP-A1- 3 210 797
- EP-A1- 3 868 570
- JP-A- 2013 067 350
- US-A1- 2013 153 110
- US-A1- 2021 323 361

## Description

### BACKGROUND OF THE INVENTION

### Field of the Invention

The present invention relates to a pneumatic tire.

### Background Art

In recent years, various kinds of small-size buses intended to transport persons or articles in urban areas have been proposed (e.g., see Japanese Laid-Open Patent Publication No. 2021-075088). Such a vehicle is required to ensure a large vehicle cabin space.

A tire mounted to the above-described vehicle is required to have excellent load bearing performance, while the vehicle cabin space is increased to the maximum degree. On the other hand, in the tire having a size to be adopted for such a vehicle, under present circumstances, strain tends to be increased in outer end portions of a belt layer in a tire axial direction during load application, so that damage to the belt layer such as separation of a belt ply tends to occur. Related technologies are also known from US 2013/153110 A1, EP 3 210 797 A1, US 2021 /323361 A1, EP 2 689 939 A1, EP 3 868 570 A1, EP O 732 226 A1, and JP 2013 067350 A.

The present invention is made in view of the aforementioned circumstances, and a main object of the present invention is to provide a pneumatic tire which has a specific tire size and can inhibit damage to a belt layer.

### SUMMARY OF THE INVENTION

The present invention is set out in the appended claims and is directed to an assembly including a rim and a pneumatic tire mounted and used on the rim. The rim has a rim diameter RD of 12 to 17 inches. A ratio SH/SW of a tire cross-sectional height SH to a tire cross-sectional width SW is 0.30 to 0.45. A ratio RW/SW of a rim width RW of the rim to the tire cross-sectional width SW is 0.78 to 0.99. The pneumatic tire includes a tread portion. A belt layer is disposed in the tread portion. The belt layer includes a first belt ply, and a second belt ply disposed outward of the first belt ply in a tire radial direction. A first edge cover rubber covering an outer end portion of the first belt ply in a tire axial direction, from inner and outer sides in the tire radial direction, is disposed on the first belt ply. A second edge cover rubber covering an outer end portion of the second belt ply in the tire axial direction, from the inner and outer sides in the tire radial direction, is disposed on the second belt ply.

The assembly of the present invention has the above-described structure, and therefore, damage to the belt layer can be inhibited.

### BRIEF DESCRIPTION OF THE DRAWINGS

FIG. 1 is a transverse cross-sectional view of a pneumatic tire according to one embodiment of the present invention;
FIG. 2 is a perspective view of a vehicle to which the tire of the present invention is mounted;
FIG. 3 is an enlarged perspective view of a tread portion in FIG. 1; and
FIG. 4 is an enlarged view of outer end portions of a first belt ply and a second belt ply on one side in a tire axial direction in FIG. 3.

### DETAILED DESCRIPTION

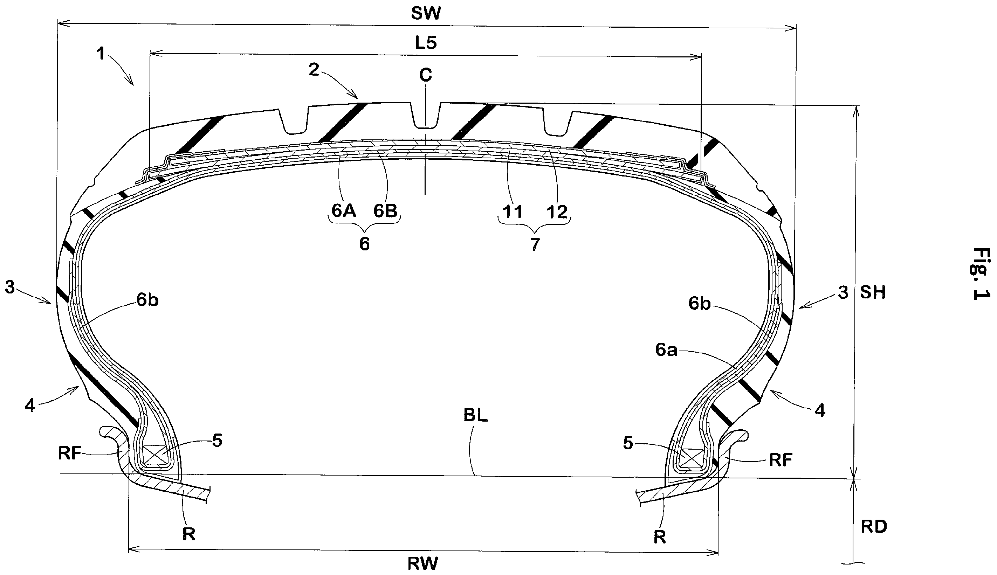

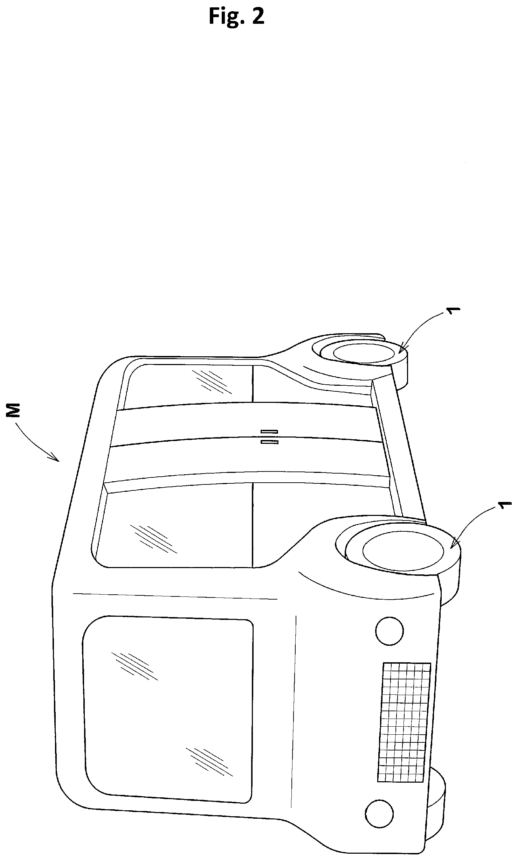

Hereinafter, one embodiment of the present invention will be described with reference to the drawings. FIG. 1 is a transverse cross-sectional view of a pneumatic tire 1 (hereinafter, may be simply referred to as "tire 1") according to one embodiment of the present invention. FIG. 2 is a perspective view conceptually showing a vehicle M to which the tire 1 of the present invention is mounted. As shown in FIG. 1 and FIG. 2, the tire 1 of the present embodiment is mounted and used on a rim R, and is suitably used as a pneumatic tire for the vehicle M such as a small-size bus or a small-size shuttle bus, for example.

As shown in FIG. 2, the above-described vehicle M is a four-wheel automobile. The vehicle M is not limited to a four-wheel structure, and may have a six-wheel structure or an eight-wheel structure. In addition, a predetermined number of the tires 1 are mounted to the vehicle M according to the wheel structure.

The vehicle M belongs to a small-size shuttle bus to be used to transport persons or articles in urban areas, for example. As the small-size shuttle bus, a vehicle having an entire length of 4 m to 7 m, an entire width of about 2 m, and a total vehicle weight of about 3 t is assumed. However, the tire 1 of the present invention may be used for not only the vehicles in the above-described range but also various kinds of vehicles.

The vehicle M may be used not only for transportation of persons but also for transportation of articles, and may be further used as a mobile store, a mobile office, or the like. The vehicle M is preferably an electric automobile having an automatic driving function, for example. In addition, the vehicle M is mainly intended for transporting persons, articles, and the like in urban areas, and thus is assumed to have a relatively low running speed range (an average speed of about 50 km/h). Thus, importance need not necessarily be placed on wet performance. However, the vehicle M is not limited to such an aspect.

When the vehicle M is an electric automobile, the motor is preferably disposed in a rim. In this case, the vehicle M preferably has an independent steering function that allows each wheel to be steered independently. Accordingly, turning or the like is easily performed on the spot, and a vehicle cabin space of the vehicle M can be increased.

The tire 1 of the present embodiment to be used for such a vehicle M is required to have a high space efficiency. Thus, a rim diameter for the tire 1 is required to be small, or the tire 1 is required to have a small tire cross-sectional height. On the other hand, the vehicle M has a commensurate weight, and thus the tire 1 is also required to have high load bearing performance.

FIG. 1 is a transverse cross-sectional view, including a tire rotation axis, of the tire 1 in a standardized state. The "standardized state" represents a state in which a tire is mounted on a standardized rim and is inflated to a standardized internal pressure and no load is applied to the tire when the tire is a pneumatic tire for which various standards are defined. For tires for which various standards are not defined, the standardized state represents a standard use state, corresponding to a purpose of use of the tire, in which the tire is not mounted to a vehicle and no load is applied to the tire. In the present specification, unless otherwise specified, dimensions and the like of components of the tire are values measured in the standardized state. In addition, dimensions of components (e.g., an inner member of the tire 1) that cannot be measured in the standardized state are values measured in a state where the tire 1 is made to approximate to the standardized state as much as possible.

The "standardized rim" represents a rim that is defined by a standard for each tire, in a standard system including the standard on which the tire is based, and is, for example, "standard rim" in the JATMA standard, "Design Rim" in the TRA standard, or "Measuring Rim" in the ETRTO standard.

The "standardized internal pressure" represents an air pressure that is defined by a standard for each tire, in a standard system including the standard on which the tire is based, and is "maximum air pressure" in the JATMA standard, the maximum value recited in the table "TIRE LOAD LIMITS AT VARIOUS COLD INFLATION PRESSURES" in the TRA standard, or "INFLATION PRESSURE" in the ETRTO standard.

The tire 1 includes a tread portion 2, a pair of sidewall portions 3, and a pair of bead portions 4. The sidewall portions 3 are respectively connected to the outer sides of the tread portion 2 in a tire axial direction, and extend in a tire radial direction. The bead portions 4 are respectively connected to the inner sides of the sidewall portions 3 in the tire radial direction. In addition, the tire 1 includes a carcass 6. The carcass 6 extends between the pair of bead portions 4. In other words, the carcass 6 extends from one of the bead portions 4 to the other of the bead portions 4, through one of the sidewall portions 3, the tread portion 2, and the other of the sidewall portions 3.

The carcass 6 includes two carcass plies 6A, 6B, for example. Each carcass ply includes a body portion 6a and turned-up portions 6b, for example. The body portion 6a extends between the pair of bead portions 4, for example. The turned-up portions 6b are connected to the body portion 6a, and are respectively turned up around the bead cores 5 from the inner side toward the outer side in the tire axial direction.

The carcass plies 6A, 6B each include a plurality of carcass cords and a topping rubber covering the carcass cords (not shown). As the carcass cords, for example, organic fiber cords such as aramid cords and rayon cords are used. The carcass cords are each preferably arranged at an angle of 70 to 90° with respect to a tire equator C, for example. However, the tire 1 of the present invention is not limited to such an aspect.

In the present invention, the rim R has a rim diameter RD of 12 to 17 inches. In addition, the ratio SH/SW of a tire cross-sectional height SH to a cross-sectional width SW of the tire 1 is 0.30 to 0.45. The ratio RW/SW of a rim width RW of the rim R to the cross-sectional width SW of the tire 1 is 0.78 to 0.99. The cross-sectional width SW is, for example, 150 to 250 mm.

The rim diameter RD is an outer diameter of a rim body part to which the bead cores 5 of the bead portion 4 fit. In addition, when projections (not shown) representing patterns or characters are provided on the side walls of the tire 1, the cross-sectional width SW of the tire 1 corresponds to a width obtained by excluding the projections. The cross-sectional height SH of the tire 1 corresponds to 1/2 of a difference between an outer diameter of the tire and the rim diameter RD. In other words, the cross-sectional height SH corresponds to a distance, in the tire radial direction, from a bead base line BL to an outer end of the tire 1 in the tire radial direction. The bead base line BL means a line passing through a rim diameter position in the tire axial direction.

The rim width RW of the rim R corresponds to a distance, in the tire axial direction, from an inner surface of one of rim flanges RF to an inner surface of the other of the rim flanges RF. In the case where the inner surfaces are inclined, the above-described distance is measured at the center position of each bead core 5 in the tire radial direction, when the tire 1 is mounted on the rim R.

As described above, in the tire 1 of the present invention, the rim diameter RD and the cross-sectional height SH are relatively small, and the rim width RW is relatively large with respect to the tire cross-sectional width SW. For example, when the tire 1 having such a structure is mounted to the above-described vehicle M (shown in FIG. 2), space efficiency in a vehicle space is increased, and, in a vehicle having a motor disposed inside the rim, a storage space for the motor can be sufficiently ensured. In addition, the tire 1 having such a structure can retain a sufficient air volume for supporting the total weight of the vehicle.

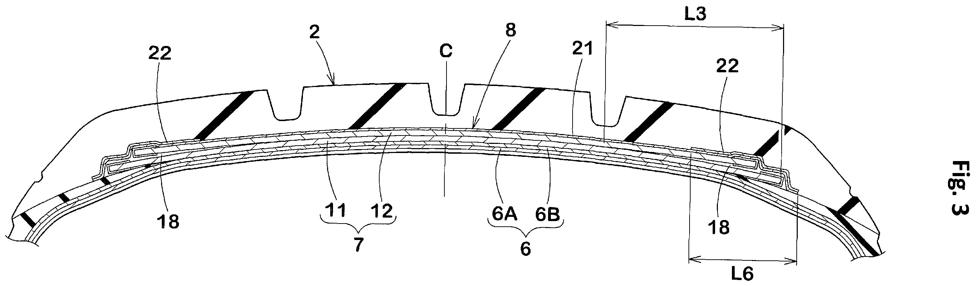

FIG. 3 is an enlarged cross-sectional view of the tread portion 2 of the tire 1 in FIG. 1. As shown in FIG. 3, a belt layer 7 is disposed in the tread portion 2. The belt layer 7 includes a first belt ply 11 adjacent to the carcass 6, and a second belt ply 12 disposed outward of the first belt ply 11 in the tire radial direction. The first belt ply 11 and the second belt ply 12 each include a plurality of belt cords arranged at an angle of 15 to 45° with respect to a tire circumferential direction and a topping rubber covering the belt cords (not shown). The belt cords of the first belt ply 11 and the belt cords of the second belt ply 12 are inclined relative to the tire circumferential direction in opposite directions. Accordingly, the tread portion 2 is effectively reinforced.

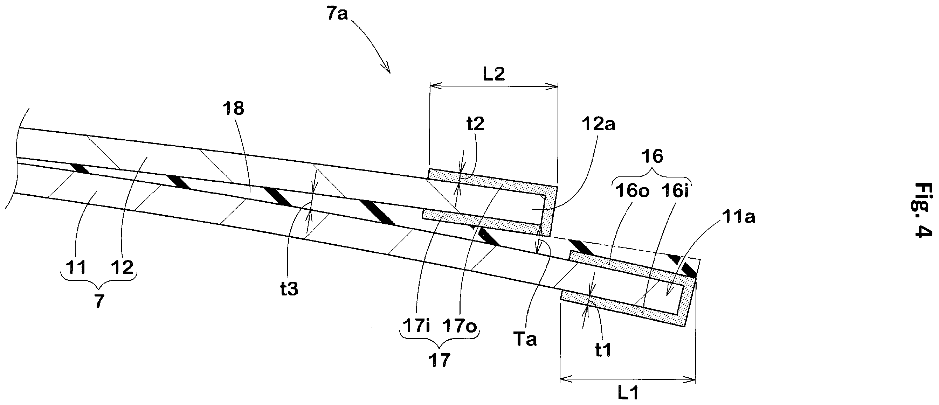

FIG. 4 is an enlarged view of outer end portions of the first belt ply 11 and the second belt ply 12 on one side in the tire axial direction. As shown in FIG. 4, in the present invention, a maximum rubber gauge Ta between the first belt ply 11 and the second belt ply 12 is 1.0 to 3.0 mm. The maximum rubber gauge Ta means a maximum distance between the first belt ply 11 and the second belt ply 12, in a region where the two plies overlap each other in the tire radial direction. In the present embodiment, the maximum rubber gauge Ta is formed at each end of the second belt ply 12 in the tire axial direction.

The tire 1 of the present invention is applied to the above-described vehicle M (shown in FIG. 2), and thus a large load acts on the belt layer 7 of the tread portion 2 (shown in FIG. 3). In the present invention, an appropriate amount of the maximum rubber gauge Ta between the first belt ply 11 and the second belt ply 12 of the belt layer 7 is ensured, whereby damage to the belt layer 7 can be inhibited. When the rubber gauge Ta is smaller than 1.0 mm, strain tends to be concentrated, so that durability of the belt layer 7 may be decreased. When the rubber gauge Ta is larger than 3.0 mm, a portion having a large curvature tends to be generated in the profiles of the first belt ply 11 and the second belt ply 12, so that durability of the belt layer 7 may be decreased.

Hereinafter, more detailed configurations of the present embodiment will be described. The configurations described below show a specific aspect of the present embodiment. Therefore, it is needless to say that the present invention can achieve the above-described effect even when the configurations described below are not provided. In addition, even when any one of the configurations described below is independently applied to the tire according to the present invention having the above-described characteristics, performance improvement corresponding to each configuration can be expected. Furthermore, when some of the configurations described below are applied in combination, complex performance improvement corresponding to each configuration can be expected.

As shown in FIG. 4, a first edge cover rubber 16 covering an outer end portion 11a of the first belt ply 11 in the tire axial direction, from inner and outer sides in the tire radial direction, is preferably disposed on the first belt ply 11. Similarly, a second edge cover rubber 17 covering an outer end portion 12a of the second belt ply 12 in the tire axial direction, from the inner and outer sides in the tire radial direction, is preferably disposed on the second belt ply 12. The first edge cover rubber 16 and the second edge cover rubber 17 having such structures allow a large gauge between the belt plies to be ensured, and inhibit the concentration of strain on an outer end portion 7a of the belt layer 7 in the tire axial direction, so that separation between the belt plies can be inhibited.

If a rubber volume of the outer end portion 7a of the belt layer 7 is excessively increased due to the first edge cover rubber 16 and the second edge cover rubber 17, fuel economy performance is deteriorated in some cases. Thus, a thickness t1 of the first edge cover rubber 16 and a thickness t2 of the second edge cover rubber 17 are each preferably 0.5 to 2.0 mm. Accordingly, damage to the belt layer 7 can be inhibited, while maintaining fuel economy performance. The thickness t1 means an average thickness of the first edge cover rubber 16, and corresponds to a value obtained by dividing a cross-sectional area of the first edge cover rubber 16 by a length along an outer surface of the belt ply. The same also applies to the thickness t2.

From the same viewpoint, a length L1 of the first edge cover rubber 16 in the tire axial direction and a length L2 of the second edge cover rubber 17 in the tire axial direction are each preferably 5% to 10% of a length L5 (shown in FIG. 1) of the belt layer 7 in the tire axial direction.

Each first edge cover rubber 16 includes an inner portion 16i covering an inner surface of the first belt ply 11 in the tire radial direction, and an outer portion 16o covering an outer surface of the first belt ply 11 in the tire radial direction. In the present embodiment, the inner portion 16i and the outer portion 16o are formed so as to have the same rubber volume. Accordingly, durability against various deformations is improved in each outer end portion 7a of the belt layer 7.

In another embodiment, in the first edge cover rubber 16, the rubber volume of the outer portion 16o may be larger than that of the inner portion 16i. In such an embodiment, the rubber volume of the first edge cover rubber 16 can be reduced in the other portions while ensuring a large gauge between the belt plies. Therefore, damage to the belt layer 7 can be inhibited, while maintaining fuel economy performance.

Similarly, each second edge cover rubber 17 includes an inner portion 17i covering an inner surface of the second belt ply 12 in the tire radial direction, and an outer portion 17o covering an outer surface of the second belt ply 12 in the tire radial direction. In the present embodiment, the inner portion 17i and the outer portion 17o are formed so as to have the same rubber volume. Accordingly, durability against various deformations is improved in each outer end portion 7a of the belt layer 7.

In another embodiment, in the second edge cover rubber 17, the rubber volume of the inner portion 17i may be larger than that of the outer portion 17o. In such an embodiment, the rubber volume of the second edge cover rubber 17 can be reduced in the other portions, while ensuring a large gauge between the belt plies. Therefore, damage to the belt layer 7 can be inhibited, while maintaining fuel economy performance.

For the first edge cover rubber 16 and the second edge cover rubber 17, as a rubber component, natural rubber or isoprene rubber is used, for example. Accordingly, the adhesiveness between the rubber and the belt cords can be improved. In addition, such rubber preferably contains a filler (carbon black) at a relatively high rate. In addition, from the viewpoint of further improving the adhesiveness between the rubber and the belt cords, the rubber preferably contains cobalt at 0.5 to 5.0 phr, for example.

A complex elastic modulus E* of each of the first edge cover rubber 16 and the second edge cover rubber 17 is preferably 5 to 15 MPa at 70°C, for example. Accordingly, fuel economy performance, and durability of the belt layer 7 are improved in a well-balanced manner. The complex elastic modulus E* is a value measured in compliance with the standards of JIS-K6394, by using a "viscoelasticity spectrometer" manufactured by Iwamoto Seisakusho, under conditions described below.
Initial strain: 10%
Amplitude: ±2%
Frequency: 10 Hz
Deformation mode: extension
Measurement temperature: 70°C

A pair of third rubbers 18 are preferably disposed between the first belt ply 11 and the second belt ply 12 in the tire radial direction. In consideration of easiness to see, each third rubber 18 is indicated by hatching in FIG. 4, but the third rubber 18 is not indicated by hatching and is indicated to be blank in FIG. 3. As shown in FIG. 4, the third rubber 18 extends in the tire axial direction, in a portion inward of the outer end portion 12a of the second belt ply 12 in the tire radial direction. In a more preferable aspect, the third rubber 18 extends to the end of the first belt ply 11 in the tire axial direction. Such a third rubber 18 can further inhibit damage to each outer end portion 7a of the belt layer 7, while maintaining fuel economy performance.

A thickness t3 of the third rubber 18 is, for example, 0.5 to 2.0 mm. The thickness t3 means an average thickness of the third rubber 18 and corresponds to a value obtained by dividing a cross-sectional area of the third rubber 18 by a length of the third rubber 18.

As shown in FIG. 3, the length L3 of each of the pair of third rubbers 18 in the tire axial direction is preferably 10% to 30% of the length L5 (shown in FIG. 1) of the belt layer 7 in the tire axial direction. Accordingly, fuel economy performance, and durability of the belt layer 7 are improved in a well-balanced manner.

The third rubbers 18 are preferably formed of the same rubber as the first edge cover rubber 16 and the second edge cover rubber 17 (shown in FIG. 4). Therefore, the above-described characteristics of the first edge cover rubber 16 and the second edge cover rubber 17 can be applied to the third rubbers 18, and thus the description thereof is omitted here.

In the present embodiment, a band layer 8 is disposed outward of the belt layer 7 in the tire radial direction. The band layer 8 includes a band ply in which a band cord is disposed at an angle of not larger than 5° with respect to the tire circumferential direction, for example. The band ply may be a jointless band ply in which the band cord is helically wound, for example. Such a band layer 8 can effectively reinforce the tread portion 2.

The band layer 8 of the present embodiment includes a first band ply 21 covering the entirety of the belt layer 7, and a second band ply 22 disposed outward of the first band ply 21 in the tire radial direction. The second band ply 22 is an edge band ply covering an outer end portion of the first band ply 21 in the tire axial direction. Therefore, in the present embodiment, a pair of the second band plies 22 are disposed outward of the first band ply 21 in the tire radial direction.

A length L6 of each second band ply 22 in the tire axial direction is 70% to 90% of the length L3 of the third rubber 18 in the tire axial direction. Such second band plies 22 can improve durability of the belt layer 7, while maintaining fuel economy performance.

Although the pneumatic tire according to the embodiments of the present invention has been described above in detail, the present invention is not limited to the above specific embodiments, and various modifications can be made to implement the present invention within the scope of protection as defined in the claims.

### EXAMPLES

Pneumatic tires having the size of 205/40R15 and the basic structure shown in FIG. 1 were produced as test samples on the basis of specifications in Table 1. As a comparative example, a pneumatic tire in which neither the first edge cover rubber nor the second edge cover rubber was provided and the maximum rubber gauge Ta between the first belt ply and the second belt ply was 0.5 mm was produced as a test sample. The tire of the comparative example had substantially the same structure as the tires of the examples except for the above-described matter. Each test tire was tested for durability of the belt layer. Specifications common to the test tires and a test method are as follows.
Rim to which the tire was mounted: 15×7.0J
Tire internal pressure: 520 kPa
Length, in tire axial direction, of belt layer: 150 mm

### <Durability of belt layer>

Each test tire was set on a drum tester, continuous running with the test tire under a constant vertical load at a constant speed was performed, and the running distance was measured when the tread portion was damaged due to damage to the outer end portion of the belt layer. The results are indicated as indexes with the index of the running distance of the comparative example being 100. A larger numerical value indicates better durability of the belt layer.

The results of the test are indicated in Table 1.

**[Table 1]**

| | Comparative example | Example 1 | Example 2 | Example 3 | Example 4 | Example 5 | Example 6 | Example 7 | Example 8 |
|---|---|---|---|---|---|---|---|---|---|
| Maximum rubber gauge Ta (mm) | 0.5 | 2.0 | 1.5 | 3.0 | 1.2 | 3.0 | 1.2 | 3.0 | 1.0 |
| Presence/absence of first edge cover rubber and second edge cover rubber | Absence | Presence | Presence | Presence | Presence | Presence | Presence | Presence | Presence |
| Thickness t1, t2 (mm) of each edge cover rubber | - | 1.0 | 1.0 | 1.0 | 0.5 | 2.0 | 1.0 | 1.0 | 1.0 |
| Length L1, L2 (mm) of each edge cover rubber | - | 15.0 | 15.0 | 15.0 | 15.0 | 15.0 | 15.0 | 15.0 | 15.0 |
| Presence/absence of third rubber | Absence | Presence | Presence | Presence | Presence | Presence | Presence | Presence | Absence |
| Thickness t3 (mm) of third rubber | - | 1.0 | 1.0 | 1.0 | 1.0 | 1.0 | 0.5 | 2.0 | - |
| Length L3 (mm) of third rubber | - | 40.0 | 40.0 | 40.0 | 40.0 | 40.0 | 40.0 | 40.0 | - |
| Durability (index) of belt layer | 100 | 140 | 125 | 135 | 120 | 140 | 115 | 145 | 110 |

As shown in Table 1, it was confirmed that the tires of the examples 1 to 8 had improved durability of each belt layer. Specifically, it was confirmed that the present invention inhibited damage to the belt layer of the tire having a specific tire size.

## Claims

1. An assembly including a rim (R) and a pneumatic tire (1) mounted and used on the rim (R), **characterized in that**
the rim (R) has a rim diameter (RD) of 12 to 17 inches,
a ratio (SH/SW) of a tire cross-sectional height (SH) to a tire cross-sectional width (SW) is 0.30 to 0.45,
a ratio (RW/SW) of a rim width (RW) of the rim (R) to the tire cross-sectional width (SW) is 0.78 to 0.99,
the pneumatic tire (1) includes a tread portion (2),
a belt layer (7) is disposed in the tread portion (2),
the belt layer (7) includes a first belt ply (11), and a second belt ply (12) disposed outward of the first belt ply (11) in a tire radial direction, and
a maximum rubber gauge (Ta) between the first belt ply (11) and the second belt (12) is 1.0 to 3.0 mm;
wherein
a first edge cover rubber (16) covering an outer end portion (11a) of the first belt ply (11) in a tire axial direction, from inner and outer sides in the tire radial direction, is disposed on the first belt ply (11), and
a second edge cover rubber (17) covering an outer end portion (12a) of the second belt ply (12) in the tire axial direction, from the inner and outer sides in the tire radial direction, is disposed on the second belt ply (12);
wherein
a pair of third rubbers (18) are disposed between the first belt ply (11) and the second belt ply (12) in the tire radial direction, and
the pair of third rubbers (18) each extend in the tire axial direction, in a portion inward of the outer end portion (12a) of the second belt ply (12) in the tire radial direction.

2. The assembly according to claim 1, wherein a thickness (t3) of each third rubber (18) is 0.5 to 2.0 mm.

3. The assembly according to claim 1 or claim 2, wherein a length (L3) of each of the pair of third rubbers (18) in the tire axial direction is 10% to 30% of a length (L5) of the belt layer (7) in the tire axial direction.

4. The assembly according to one of claims 1 to 3, wherein a thickness (t1) of the first edge cover rubber (16) and a thickness (t2) of the second edge cover rubber (17) are each 0.5 to 2.0 mm.

5. The assembly according to one of claims 1 to 4, wherein a length (L1) of the first edge cover rubber (16) in the tire axial direction and a length (L2) of the second edge cover rubber (17) in the tire axial direction are each 5% to 10% of a length (L5) of the belt layer (7) in the tire axial direction.

## Patentansprüche

1. Anordnung mit einer Felge (R) und einem auf der Felge (R) aufgezogenen und verwendeten Luftreifen (1), **dadurch gekennzeichnet, dass**
die Felge (R) einen Felgendurchmesser (RD) von 12 bis 17 Zoll aufweist,
ein Verhältnis (SH/SW) einer Reifenquerschnittshöhe (SH) zu einer Reifenquerschnittsbreite (SW) 0,30 bis 0,45 beträgt,
ein Verhältnis (RW/SW) einer Felgenbreite (RW) der Felge (R) zu der Reifenquerschnittsbreite (SW) 0,78 bis 0,99 beträgt,
der Luftreifen (1) einen Laufflächenabschnitt (2) aufweist,
eine Gürtellage (7) in dem Laufflächenabschnitt (2) angeordnet ist, die Gürtellage (7) eine erste Gürtelschicht (11) und eine zweite Gürtelschicht (12) aufweist, die in einer Reifenradialrichtung außen von der ersten Gürtelschicht (11) angeordnet ist, und
eine maximale Gummidicke (Ta) zwischen der ersten Gürtelschicht (11) und dem zweiten Gürtel (12) 1,0 bis 3,0 mm beträgt;
wobei
ein erster Kantenabdeckgummi (16), der einen äußeren Endabschnitt (11a) der ersten Gürtelschicht (11) in einer Reifenaxialrichtung von Innen- und Außenseiten in der Reifenradialrichtung abdeckt, auf der ersten Gürtelschicht (11) angeordnet ist, und
ein zweiter Kantenabdeckgummi (17), der einen äußeren Endabschnitt (12a) der zweiten Gürtelschicht (12) in der Reifenaxialrichtung von Innen- und Außenseiten in der Reifenradialrichtung abdeckt, auf der zweiten Gürtelschicht (12) angeordnet ist;
wobei
ein Paar dritter Gummis (18) zwischen der ersten Gürtelschicht (11) und der zweiten Gürtelschicht (12) in der Reifenradialrichtung angeordnet ist, und
sich das Paar dritter Gummis (18) jeweils in der Reifenaxialrichtung in einem Abschnitt innen von dem äußeren Endabschnitt (12a) der zweiten Gürtelschicht (12) in der Reifenradialrichtung erstreckt.

2. Anordnung nach Anspruch 1, wobei eine Dicke (t3) jedes dritten Gummis (18) 0,5 bis 2,0 mm beträgt.

3. Anordnung nach Anspruch 1 oder Anspruch 2, wobei eine Länge (L3) jedes des Paars dritter Gummis (18) in der Reifenaxialrichtung 10 % bis 30 % einer Länge (L5) der Gürtellage (7) in der Reifenaxialrichtung beträgt.

4. Anordnung nach einem der Ansprüche 1 bis 3, wobei eine Dicke (t1) des ersten Kantendeckgummis (16) und eine Dicke (t2) des zweiten Kantendeckgummis (17) jeweils 0,5 bis 2,0 mm betragen.

5. Anordnung nach einem der Ansprüche 1 bis 4, wobei eine Länge (L1) des ersten Kantendeckgummis (16) in der Reifenaxialrichtung und eine Länge (L2) des zweiten Kantendeckgummis (17) in der Reifenaxialrichtung jeweils 5 % bis 10 % einer Länge (L5) der Gürtellage (7) in der Reifenaxialrichtung betragen.

## Revendications

1. Assemblage incluant une jante (R) et un bandage pneumatique (1) monté et utilisé sur la jante (R),
**caractérisé en ce que**
la jante (R) a un diamètre de jante (RD) de 12 à 17 pouces,
un rapport (SH/SW) d'une hauteur de section transversale du pneumatique (SH) sur une largeur de section transversale du pneumatique (SW) est de 0,30 à 0,45,
un rapport (RW/SW) d'une largeur de jante (RW) de la jante (R) sur la largeur de section transversale du pneumatique (SW) est de 0,78 à 0,99,
le bandage pneumatique (1) inclut une portion formant bande de roulement (2),
une couche de ceinture (7) est disposée dans la portion formant bande de roulement (2),
la couche de ceinture (7) inclut une première nappe de ceinture (11), et une seconde nappe de ceinture (12) disposée à l'extérieur de la première nappe de ceinture (11) dans une direction radiale du pneumatique, et
un gabarit de caoutchouc maximum (Ta) entre la première nappe de ceinture (11) et la seconde nappe de ceinture (12) est de 1,0 à 3,0 mm ;
dans lequel
un premier caoutchouc de couverture de bord (16) recouvrant une portion d'extrémité extérieure (11a) de la première nappe de ceinture (11) dans une direction axiale du pneumatique, depuis des côtés intérieur et extérieur dans la direction radiale du pneumatique, est disposé sur la première nappe de ceinture (11), et
un deuxième caoutchouc de couverture de bord (17) recouvrant une portion d'extrémité extérieure (12a) de la seconde nappe de ceinture (12) dans la direction axiale du pneumatique, depuis des côtés intérieur et extérieur dans la direction radiale du pneumatique, est disposé sur la seconde nappe de ceinture (12) ;
dans lequel
une paire de troisièmes caoutchoucs (18) sont disposés entre la première nappe de ceinture (11) et la seconde nappe de ceinture (12) dans la direction radiale du pneumatique, et
la paire de troisièmes caoutchoucs (18) s'étendent chacun dans la direction axiale du pneumatique, dans une portion à l'intérieur de la portion d'extrémité extérieure (12a) de la seconde nappe de ceinture (12) dans la direction radiale du pneumatique.

2. Assemblage selon la revendication 1, dans lequel une épaisseur (t3) de chaque troisième caoutchouc (18) est de 0,5 à 2,0 mm.

3. Assemblage selon la revendication 1 ou 2, dans lequel une longueur (L3) de chacun de la paire de troisièmes caoutchoucs (18) dans la direction axiale du pneumatique est de 10 % à 30 % d'une longueur (L5) de la couche de ceinture (7) dans la direction axiale du pneumatique.

4. Assemblage selon l'une quelconque des revendications 1 à 3, dans lequel une épaisseur (t1) du premier caoutchouc de couverture de bord (16) et une épaisseur (t2) du deuxième caoutchouc de couverture de bord (17) sont chacune de 0,5 à 2,0 mm.

5. Assemblage selon l'une quelconque des revendications 1 à 4, dans lequel une longueur (L1) du premier caoutchouc de couverture de bord (16) dans la direction axiale du pneumatique et une longueur (L2) du deuxième caoutchouc de couverture de bord (17) dans la direction axiale du pneumatique sont chacune de 5 % à 10 % d'une longueur (L5) de la couche de ceinture (7) dans la direction axiale du pneumatique.
